# EUROPEAN PATENT APPLICATION

(11) **EP 4 397 170 A1**
(43) Date of publication of application: **10.07.2024**
(21) Application number: 23215139.9
(22) Date of filing: 08.12.2023
(51) Int. Cl.: A01F 15/10

(54) **LARGE SQUARE BALER WITH CONTROLLABLE FEEDER SYSTEM**

(30) Priority: 05.01.2023 US 202318150480
(71) Applicant: Deere & Company, Moline, IL 61265 (US)
(72) Inventor: Vadnere, Mohan A., Mannheim (DE); Jadhao, Umesh B., Mannheim (DE)
(74) Representative: Stein, Stefan

(57) **Abstract**

The present invention relates to a baler implement (20) includes a crop sensor (58) operable to sense data related to a quantity of the crop material accumulated within a pre-compression chamber (36). A baler controller (60) is operable to execute a feeder control algorithm (82) to receive a quantity signal from the crop sensor. When the quantity signal indicates that the quantity of the crop material accumulated within the pre-compression chamber is equal to or greater than a quantity threshold, the baler controller may then signal an actuator (76) to release a lock (72), thereby allowing a feeder fork (40) to move from a retracted position to an extended position thereof to move the crop material from the pre-compression chamber to a compression chamber (32) for baling.

## Description

### TECHNICAL FIELD

The disclosure generally relates to a large square baler, and more particularly to a feeder system of the large square baler.

### BACKGROUND

A baler implement configured to form a bale having a parallelepiped shape may be referred to as a square baler. A square baler may be referred to as a large square baler or a small square baler based on the size of the bale they form. A baler implement configured as a square baler may include a pick-up that is operable to gather crop material. A pre-compression chamber is positioned downstream of the pick-up to receive the crop material from the pick-up. The crop material is accumulated within the pre-compression chamber until a feeder system is activated to move the accumulated crop material from the pre-compression chamber into a compression chamber. The compression chamber is positioned to receive the crop material from the pre-compression chamber and shaped to form the crop material into the bale. Once in the compression chamber, the crop material is compressed via a reciprocating plunger into a flake. Multiple flakes are then bound together to form the bale.

The feeder system may include a feeder fork that is moveable relative to the pre-compression chamber. The feeder fork may move between a retracted position and an extended position. When in the retracted position, the feeder fork is withdrawn from the pre-compression chamber to allow the crop material to accumulate within the pre-compression chamber. When moved from the retracted position into the extended position, the feeder fork protrudes into and moves through the pre-compression chamber to move the crop material accumulated within the pre-compression chamber from the pre-compression chamber into the compression chamber.

The baler implement may be configured to move the feeder fork from the retracted position into the extended position with every stroke of the plunger. This may be referred to as a 1:1 or continuous feed stroke operating mode. The baler implement may alternatively be configured to move the feeder fork from the retracted position into the extended position or only after a desired volume or quantity of crop material has accumulated within the pre-compression chamber. This may be referred to herein as an automatic feed stroke operating mode.

In order to operate the baler implement in the automatic feed stroke operating mode, the baler implement may include a lock that is moveable between an engaged position and a disengaged position. When disposed in the engaged position, the lock is engaged with the feeder fork to secure the feeder fork in the retracted position. When the lock is disposed in the disengaged position, the lock is disengaged from the feeder fork to allow movement of the feeder fork between the retracted position and the extended position thereof.

In one implementation, the baler implement may be equipped with a spring loaded plate that extends into the pre-compression chamber. As the crop material accumulates within the pre-compression chamber, the crop material pushes the plate out of the pre-compression chamber. The position of the plate thereby measures the quantity or volume of the crop material within the pre-compression chamber. A push-pull cable may connect the plate and the lock. Upon the plate moving a pre-set distance, the push-pull cable may trigger the lock to move from the engaged position into the disengaged position. In this way, the feeder fork only moves when the desired quantity of crop material is accumulated within the pre-compression chamber. However, due to the dust and debris in and around the pre-compression chamber, free movement of the push-pull cable may become restricted causing the system to function improperly.

### SUMMARY

A baler implement is provided. The baler implement includes a pre-compression chamber, and a compression chamber positioned to receive crop material from the pre-compression chamber and form the crop material into a bale. A crop sensor is operable to sense data related to a quantity of the crop material accumulated within the pre-compression chamber. A feeder fork is moveable relative to the pre-compression chamber between a retracted position, in which the feeder fork is withdrawn from the pre-compression chamber to allow the crop material to accumulate within the pre-compression chamber, and an extended position, in which the feeder fork protrudes into and moves through the pre-compression chamber to move the crop material accumulated within the pre-compression chamber into the compression chamber. A baler controller includes a processor and a memory having a feeder control algorithm stored thereon. The processor is operable to execute the feeder control algorithm to receive a quantity signal from the crop sensor. The quantity signal relates to a quantity of the crop material accumulated within the pre-compression chamber. When the crop quantity signal indicates that the quantity of the crop material accumulated within the pre-compression chamber is equal to or greater than a quantity threshold, the baler controller may then control the feeder fork to move from the retracted position to the extended position thereof.

In one aspect of the disclosure, the baler implement may further include a lock that is moveable between an engaged position and a disengaged position. When the lock is disposed in the engaged position, the lock is engaged with the feeder fork to secure the feeder fork in the retracted position. When the lock is disposed in the disengaged position, the lock is disengaged from the feeder fork to allow movement of the feeder fork between the retracted position and the extended position thereof.

An actuator is coupled to the lock. The actuator is operable to move the lock from the engaged position to the disengaged position in response to a lock release signal. In one implementation, the actuator is controllable via an electrical control signal generated by the baler controller. For example, the actuator may include, but is not limited to, one of an electrically actuated linear actuator or a hydraulic cylinder responsive to an electrically actuated control valve.

In one aspect of the disclosure, the crop sensor may include, but is not limited to, a plate that may be spring loaded and biased into a default position disposed within the pre-compression chamber. The plate may be moveable in response to a force exerted thereon by the crop material accumulated within the pre-compression chamber.

The crop sensor may include a position sensor that is operable to detect a position of the plate relative to the pre-compression chamber and generate the quantity signal related thereto. For example, the quantity signal may be related to the position of the plate relative to the pre-compression chamber. In one implementation, the plate may be mounted to a shaft and rotatable about a longitudinal axis of the shaft. The position sensor may include a rotary position sensor operable to detect a change in rotational position of the shaft about the longitudinal axis of the shaft.

In one aspect of the disclosure, the processor may be operable to execute the feeder control algorithm to control the feeder fork by communicating the lock release signal to the actuator when the crop quantity signal indicates that the quantity of the crop material accumulated within the pre-compression chamber is equal to or greater than the quantity threshold.

In one aspect of the disclosure the processor may be operable to execute the feeder control algorithm to display a feeder control screen on a user interface. The user interface may include, but is not limited to, a touchscreen display. The feeder control screen may include, but is not limited to, a mode selection button for selecting a desired operating mode, and a quantity control button for defining the quantity threshold. The processor may be operable to execute the feeder control algorithm to receive a mode selection input via the user interface. The mode selection input selects a desired operating mode for the feeder fork. The mode selection button may include an option to select the desired operating mode from one of a continuous feed stroke operating mode or an automated feed stroke operating mode.

In one implementation of the disclosure, the processor is operable to execute the feeder control algorithm to receive a threshold input via the user interface. The threshold input defines the quantity threshold. As described above, the baler controller may present the feeder control screen including the quantity control button for defining the quantity threshold. The user may enter the threshold input via the quantity control button via the user interface.

Accordingly, the baler implement described herein enables the operator to control the quantity of crop material that may accumulate within the pre-compression chamber remotely from the cab via the user interface. As such, the operator may change the quantity threshold to control operation of the feeder system from an operator's station of an associated work vehicle, without having to manually adjust mechanical components of the baler implement. Additionally, by controlling the actuator via an electronic signal from the baler controller to control the lock, the need for a push-pull cable or other mechanical connection connecting the measuring plates and the lock is eliminated thereby improving the reliability of the baler implement.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of a traction unit and an associated baler implement.
FIG. 2 is a schematic side view of the baler implement.
FIG. 3 is a schematic side view of a feeder system of the baler implement showing a feeder fork in a retracted position.
FIG. 4 is a schematic side view of the feeder system showing the feeder fork in an extended position.
FIG. 5 is a schematic perspective view of a feeder system of the baler implement.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

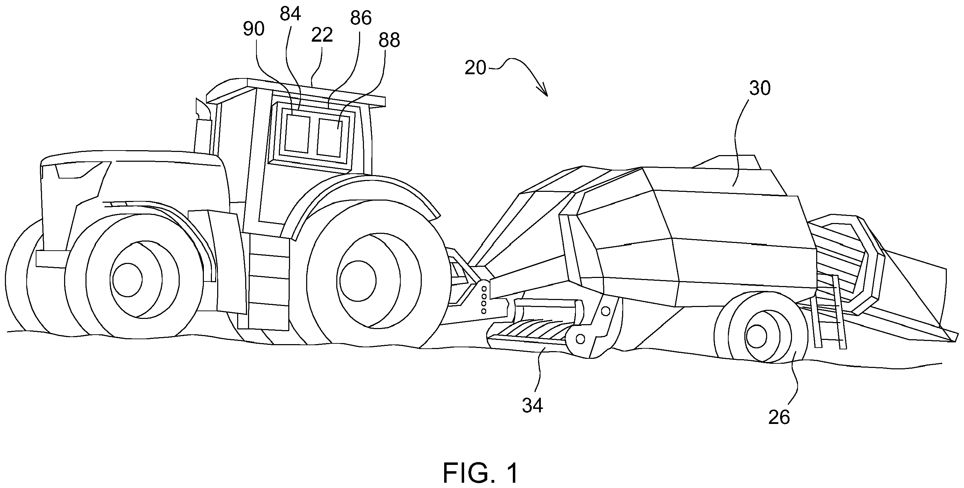

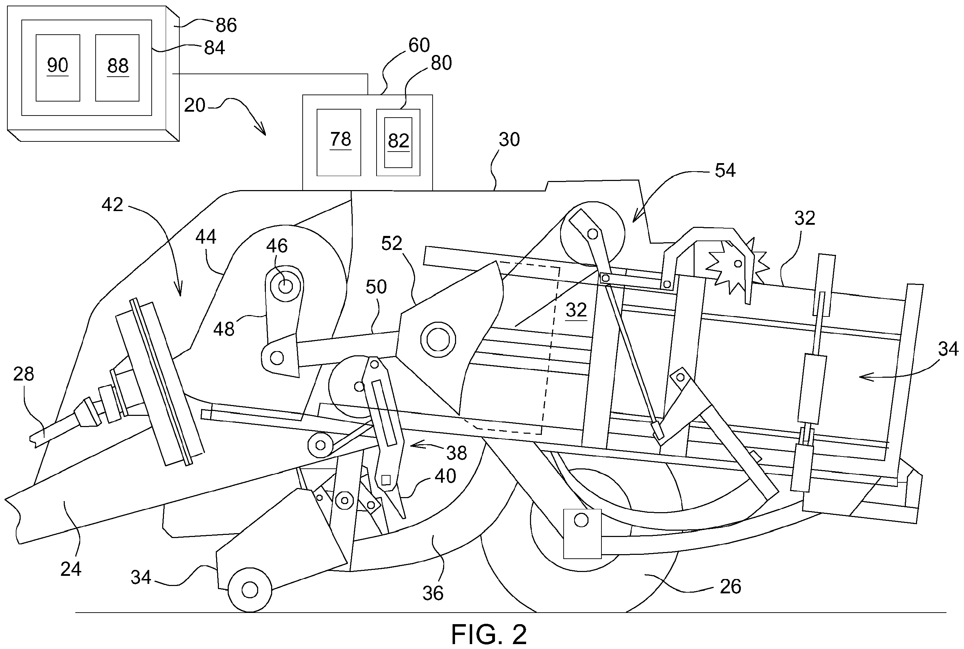

Referring to the Figures, wherein like numerals indicate like parts throughout the several views, a baler implement is generally shown at 20. Referring to the FIGS. 1 and 2, an example implementation of the baler implement 20 is configured as a large square baler. However, it should be appreciated that the teachings of this disclosure may be applied to other baler implement 20 platforms, such as but not limited to a small square baler, and are not limited to the example implementation of the large square baler shown in the Figures and described herein.

As shown in FIG. 1, a traction unit 22, such as but not limited to a tractor or other agricultural vehicle, is coupled to the baler implement 20 for pulling and powering the baler implement 20. However, it should be appreciated that in other embodiments the baler implement 20 may be self-propelled. As depicted in FIG. 1, the baler implement 20 may move across a field and gather and process crop material to form a bale having a parallelepiped shape. The baler implement 20 may then eject the formed bale from the rear of the baler.

Referring to FIG. 2, the example implementation of the baler implement 20 includes a frame 24, ground engaging elements 26, such as but not limited to wheels or tracks, and an input shaft 28, such as a power-take-off (PTO) shaft, which can receive rotational power from a power source, such as but not limited to the traction unit 22.

The baler implement 20 includes a housing 30 or body, which generally shields various internal components of the baler implement 20. The housing 30 is attached to and supported by the frame 24. The housing 30 includes multiple wall sections or panels that form and/or define a baling chamber 32. The baling chamber 32 may alternatively be referred to as a compression chamber 32 (shown in FIG. 2) for forming the bale.

The baler implement 20 includes a pick-up 34. The pick-up 34 is disposed proximate the forward end of the frame 24. The pick-up 34 gathers crop material from the ground surface and directs the gathered crop material toward and into an inlet of a pre-compression chamber 36 of the baler implement 20. The pick-up 34 may include, but is not limited to tines, forks, augers, conveyors, baffles, etc., for gathering and moving the crop material. The round baler implement 20 may be equipped with a pre-cutter, disposed between the pick-up 34 and the inlet of the pre-compression chamber 36. As such, the pre-cutter is disposed downstream of the pick-up 34 and upstream of the inlet of the pre-compression chamber 36 relative to a direction of travel of the crop material. The pre-cutter cuts or chops the crop material into smaller pieces as is understood by those skilled in the art.

The pick-up 34 directs the gathered crop material into the pre-compression chamber 36, which stores and/or accumulates a volume of gathered crop material. A feeder system 38 includes a plurality of feeder forks 40, which are timed to move the crop material from the pre-compression chamber 36 into the baling chamber 32.

Referring to FIG. 2, the input shaft 28 or PTO shaft is connected to an input of a transmission 42 to provide rotational power to the baler implement 20 from the traction unit 22 or other associated vehicle or power source. The transmission 42 includes a gearbox 44 which converts the rotational motion of the input shaft 28 along a generally longitudinal axis 66 of the baler implement 20 to an output 46 of the transmission 42 having a rotational motion along a generally transverse axis of the baler implement 20.

The baler implement 20 includes a crank arm 48 connected to the output 46 of the transmission 42. A connecting link 50 interconnects the crank arm 48 and a plunger 52. The crank arm 48 rotates based upon the output 46 of the transmission 42 and the plunger 52 moves in a reciprocal motion within the compression chamber 32 as the crank arm 48 rotates. The plunger 52 extends into the compression chamber 32, thereby compressing the crop material, and then at least partially retracts from the compression chamber 32, at which time the feeder system 38 moves more crop material from the pre-compression chamber 36 into the baling chamber 32, i.e., the compression chamber 32. Each charge of crop material moved into the compression chamber 32 is compressed by the plunger 52 into a flake. Multiple flakes are compressed against each other to form the bale.

When the bale is formed within the compression chamber 32, a knotter system 54 wraps a plurality of twine strands around the bale to secure the shape of the bale. The knotter system 54 wraps the twine around a longitudinal extent or longest length of the bale, with each individual twine strand encircling the bale. The knotter system 54 ties each end of the twine of each respective twine strand together to form a knot, securing each respective twine strand in place.

In the example implementation shown in the figures and described herein, with reference to FIG. 1, a completed bale is pushed off a rearward end of the baler implement 20 by a subsequently formed bale, or otherwise discharged off the rearward end of the baler implement 20 by a powered roller or some other discharge mechanism, whereby the bale is deposited on the ground surface.

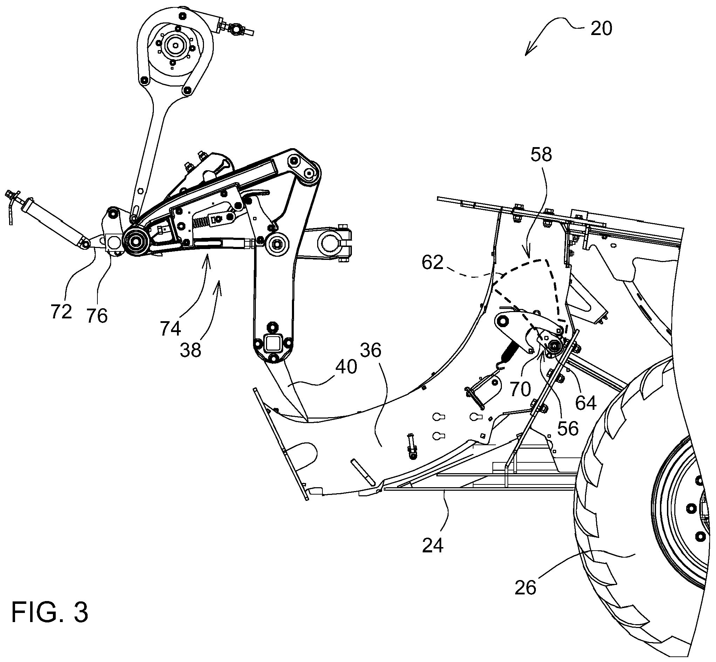

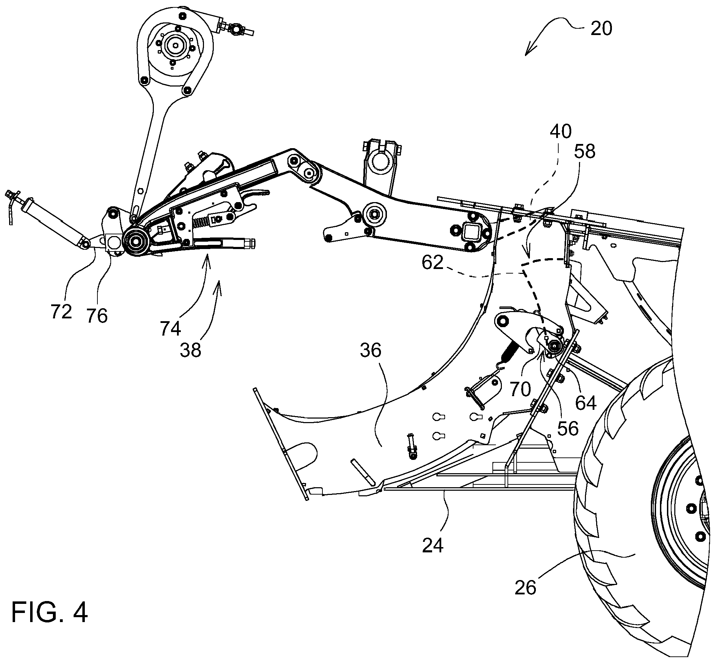

Referring to FIGS. 3-5, the feeder system 38 includes at least one, but preferably a plurality of feeder forks 40. While only a single feeder fork 40 is described in detail below, it should be appreciated that the description of the feeder fork 40 describes all of the feeder forks 40. The feeder fork 40 is moveable relative to the pre-compression chamber 36 between a retracted position, shown in FIG. 3, and an extended position, shown in FIG. 4. When disposed in the retracted position, the feeder fork 40 is withdrawn from the pre-compression chamber 36 to allow the crop material to accumulate within the pre-compression chamber 36. When the feeder fork 40 is moved from the retracted position into the extended position, the feeder fork 40 protrudes into and moves through the pre-compression chamber 36 to move the crop material accumulated within the pre-compression chamber 36 into the compression chamber 32.

The feeder fork 40 may be powered and motivated, for example, via mechanical connections 74 driven by the output 46 and/or crank arm 48 of the baler implement 20. It should be appreciated that the feeder fork 40 may be actuated by power sources and/or connections other than noted herein and shown in the Figures. The manner in which the feeder fork 40 is motivated is understood by those skilled in the art, not pertinent to the teachings of this disclosure, and are therefore not described in greater detail herein.

The feeder fork 40 may be controlled to operate in a 1:1 or continuous feed stroke operating mode, or an automatic feed stroke mode. When configured to operate in the continuous feed stroke operating mode, the feeder fork 40 executes a feed stroke, in which the feeder fork 40 moves from the retracted position into the extended position, with each stroke of the plunger 52. When configured to operate in the automatic feed stroke mode, the feeder fork 40 executes a feed stroke only after a desired quantity of the crop material has accumulated within the pre-compression chamber 36.

In order to operate the feeder fork 40 in the automatic feed stroke mode, the baler implement 20 may be equipped with a trigger system 56. The trigger system 56 may include, for example, a crop sensor 58 that is operable to sense data related to a quantity of the crop material accumulated within the pre-compression chamber 36. The crop sensor 58 may further generate and communicate a quantity signal to a baler controller 60. The quantity signal may include, for example, an electronic signal that communicates the sensed data related to the quantity of the crop material within the pre-compression chamber 36. In other implementations, the quantity signal may include a simple electric current.

In the example implementation shown in the Figures and described herein, the crop sensor 58 includes at least one measuring plate 62 at least partially positioned within the pre-compression chamber 36. It should be appreciated that the at least one plate 62 may include a plurality of plates 62. The plates 62 may be arranged such that their flat planar surfaces thereof are substantially parallel with a direction of movement of the crop material within the pre-compression chamber 36.

The plates 62 are moveable in response to a force exerted on the plates 62 by the crop material accumulated within the pre-compression chamber 36. For example, the plates 62 may be mounted to a shaft 64 and rotatable about a longitudinal axis 66 of the shaft 64. The longitudinal axis 66 of the shaft 64 is arranged generally transverse and/or perpendicular to the direction of movement of the crop material within the pre-compression chamber 36, generally across a width of the baler implement 20. The plates 62 may be biased into an initial position, shown in FIG. 3, in which the plates 62 are positioned within the pre-compression chamber 36, by a spring or other biasing device. A force applied by the crop material onto the plates 62 operates against the bias of the biasing device to move the plates 62 from the initial position, out of the pre-compression chamber 36 and into a fully displaced position, shown in FIG. 4, as the pre-compression chamber 36 fills with the crop material. As such, the degree of movement of the plates 62 about the longitudinal axis 66 of the shaft 64, between the initial position of the plates 62 and the fully displaced position of the plates 62, is a measurement of and related to the quantity of the crop material accumulated within the pre-compression chamber 36.

The crop sensor 58 may further include a position sensor 70 that is operable to detect a position of the plates 62 relative to the pre-compression chamber 36. The position sensor 70 of the crop sensor 58 may further generate the quantity signal. As such, the quantity signal may be related to the position of the plates 62 relative to the pre-compression chamber 36. In the example implementation shown in the Figures and described herein, the position sensor 70 may include a rotary position sensor 70 that is operable to detect a change in a rotational position of the shaft 64 about the longitudinal axis 66 of the shaft 64. For example, the position sensor 70 may include any device capable of detecting the angular displacement of the plates 62 about the longitudinal axis 66 of the shaft 64 and generating an electronic signal indicative of the sensed angular displacement. It should be appreciated that the crop sensor 58 and/or the position sensor 70 may be configured differently than the example implementation described herein, and may include any device capable of sensing or detecting data that is related to the quantity of the crop material within the pre-compression chamber 36. Other potential implementations of the crop sensor 58 may include, but are not limited to, cameras, weight sensors, force sensors, etc. In one implementation, it is contemplate 62d that a mass flow sensor may be used to track and calculate the quantity of the crop material entering the pre-compression chamber 36. Accordingly, it should be appreciated that the crop sensor 58 should be interpreted broadly, and not limited to the example implementations shown in the Figures are described herein.

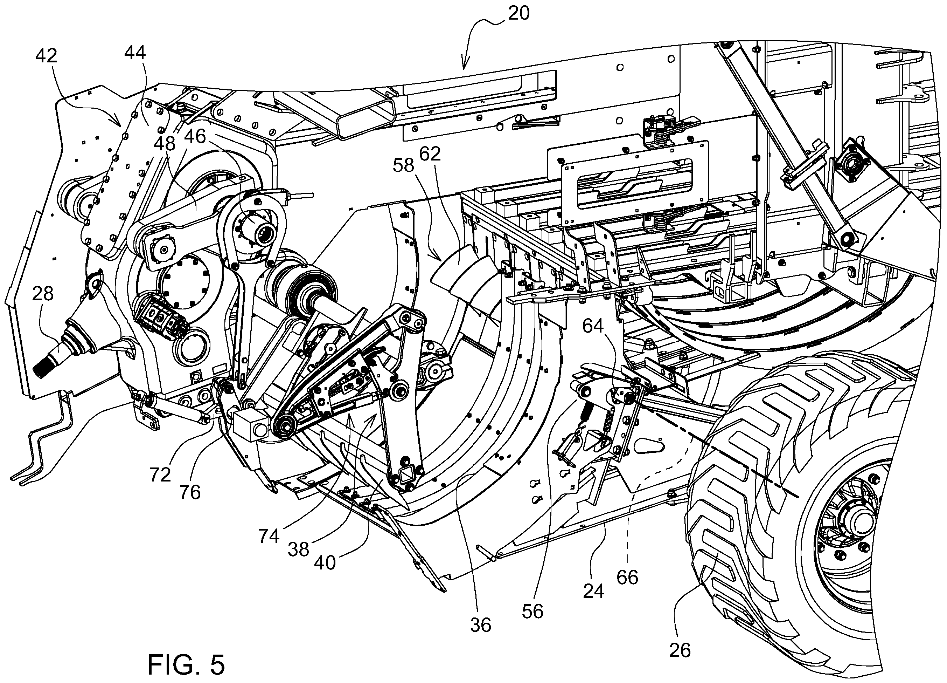

As best shown in FIG. 5, the trigger system 56 may further include a lock 72. The lock 72 is moveable between an engaged position and a disengaged position. When the lock 72 is disposed in the engaged position, the lock 72 is engaged with the feeder fork 40 to prevent movement of the feeder fork 40 and secure the feeder fork 40 in the retracted position. When the lock 72 is disposed in the disengaged position, the lock 72 is disengaged from the feeder fork 40 thereby allowing movement of the feeder fork 40 between the retracted position and the extended position thereof. The lock 72 may include a device capable of preventing movement of the feeder fork 40. For example, the lock 72 may include, but is not limited to, a pin, shaft, or bar that is moveable to block/allow movement of the feeder fork 40 and/or mechanical linkages 74 connected thereto.

An actuator 76 is coupled to the lock 72. The actuator 76 is operable to move the lock 72 from the engaged position to the disengaged position in response to a lock release signal. The actuator 76 may be controllable via an electrical signal. As such, the lock release signal may include an electrical and/or electronic control signal. For example, the actuator 76 may include, but is not limited to, one of an electrically actuated linear actuator 76, or a hydraulic cylinder responsive to an electrically actuated control valve. It should be appreciated that the lock 72 may further include other brackets, levers, pivots, etc., necessary to couple the actuator 76 the lock 72 in order to effectuate movement of the lock 72.

The baler controller 60 is disposed in communication with the crop sensor 58, for example the position sensor 70 thereof, and the actuator 76. The baler controller 60 may be operable to receive the quantity signal from the crop sensor 58, and output and communicate the lock release signal to the actuator 76. While the baler controller 60 is generally described herein as a singular device, it should be appreciated that the baler controller 60 may include multiple devices linked together to share and/or communicate information therebetween. Furthermore, it should be appreciated that the baler controller 60 may be located on the baler implement 20 or located remotely from the baler implement 20, such as in associated traction unit 22.

The baler controller 60 may alternatively be referred to as a computing device, a computer, a controller, a control unit, a control module, a module, etc. The baler controller 60 includes a processor 78, a memory 80, and all software, hardware, algorithms, connections, sensors, etc., necessary to manage and control the operation of the crop sensor 58 and the actuator 76. As such, a method may be embodied as a program or algorithm operable on the baler controller 60. It should be appreciated that the baler controller 60 may include any device capable of analyzing data from various sensors, comparing data, making decisions, and executing the required tasks.

As used herein, "baler controller 60" is intended to be used consistent with how the term is used by a person of skill in the art, and refers to a computing component with processing, memory, and communication capabilities, which is utilized to execute instructions (i.e., stored on the memory or received via the communication capabilities) to control or communicate with one or more other components. In certain embodiments, the baler controller 60 may be configured to receive input signals in various formats (e.g., hydraulic signals, voltage signals, current signals, CAN messages, optical signals, radio signals), and to output command or communication signals in various formats (e.g., hydraulic signals, voltage signals, current signals, CAN messages, optical signals, radio signals).

The baler controller 60 may be in communication with other components on the baler implement 20, such as hydraulic components, electrical components, and operator inputs within an operator station of an associated work vehicle. The baler controller 60 may be electrically connected to these other components by a wiring harness such that messages, commands, and electrical power may be transmitted between the baler controller 60 and the other components. Although the baler controller 60 is referenced in the singular, in alternative embodiments the configuration and functionality described herein can be split across multiple devices using techniques known to a person of ordinary skill in the art.

The baler controller 60 may be embodied as one or multiple digital computers or host machines each having one or more processors, read only memory (ROM), random access memory (RAM), electrically-programmable read only memory (EPROM), optical drives, magnetic drives, etc., a high-speed clock, analog-to-digital (A/D) circuitry, digital-to-analog (D/A) circuitry, and any required input/output (I/O) circuitry, I/O devices, and communication interfaces, as well as signal conditioning and buffer electronics.

The computer-readable memory 80 may include any non-transitory/tangible medium which participates in providing data or computer-readable instructions. The memory 80 may be non-volatile or volatile. Non-volatile media may include, for example, optical or magnetic disks and other persistent memory. Example volatile media may include dynamic random access memory (DRAM), which may constitute a main memory. Other examples of embodiments for memory 80 include a floppy, flexible disk, or hard disk, magnetic tape or other magnetic medium, a CD-ROM, DVD, and/or any other optical medium, as well as other possible memory devices such as flash memory.

The baler controller 60 includes the tangible, non-transitory memory 80 on which are recorded computer-executable instructions, including a feeder control algorithm 82. The processor 78 of the baler controller 60 is configured for executing the feeder control algorithm 82. The feeder control algorithm 82 implements a method of controlling the feeder system 38 of the baler implement 20, described in detail below.

The baler controller 60 may display a feeder control screen 84 on a user interface 86. In one example implementation, the user interface 86 may include, but is not limited to, a visual display device, such as but not limited to, a touchscreen display, located in an operator's station of an associated traction unit 22 attached to the baler implement 20. It should be appreciated that the user interface 86 may be located other than on the associated traction unit 22. For example, the user interface 86 may be located on the baler implement 20. Additionally, the user interface 86 may include features other than the visual display, such as but not limited to, a tactile button, a dial, a microphone for entering verbal commands, a keyboard, a joystick, etc.

The feeder control screen 84 may be configured to display or present a mode selection button 88 and/or a quantity control button 90. The mode selection button 88 may be used by the operator to select a desired operating mode. As such, the mode selection button 88 may present an option to select a desired operating mode for the feeder system 38 from one of the continuous feed stroke operating mode or the automated feed stroke operating mode. As described above, when the feeder system 38 is configured to operate in the continuous feed stroke operating mode, the feeder fork 40 executes a feed stroke with each stroke of the plunger 52. When the feeder system 38 is configured to operate in the automatic feed stroke mode, the feeder fork 40 executes a feed stroke only after a desired quantity of the crop material has accumulated within the pre-compression chamber 36. The operator may select and/or change the desire operating mode during operation by entering a mode selection input via the mode selection button 88 of the user interface 86, without manually adjusting any mechanical components of the feeder system 38. The baler controller 60 receives the mode selection input via the user interface 86.

The quantity control button 90 may be used by the operator to define a quantity threshold. The quantity threshold is a measure of the desired quantity to accumulate in the pre-compression chamber 36 before activating the feeder forks 40 to move the crop material from the pre-compression chamber 36 to the compression chamber 32. The quantity control button 90 may include, for example, an increase button for increasing the quantity threshold and a decrease button for decreasing the quantity threshold. In other implementations, the quantity control button 90 may include a numeric pad for entering a numeric value of the quantity threshold. It should be appreciated that the quantity control button 90 may be configured differently than the example implementations described herein. The quantity threshold may be changed, for example, to change the quantity of crop moved into the compression chamber 32 due to changing crop characteristics, such as different crop types, moisture content, etc. It should be appreciated that the quantity threshold is a value defined in the baler controller 60 and saved in the memory 80 thereof, and may be changed during operation via the quantity control button 90, without the need to manually adjust any mechanical components of the feeder system 38. The user may enter a threshold input defining the quantity threshold via the quantity control button 90 of the user interface 86. The baler controller 60 may receive the threshold input from a user interface 86.

The baler controller 60 further receives the quantity signal from the crop sensor 58. As described above, the quantity signal relates to a quantity of the crop material accumulated within the pre-compression chamber 36. For example, as described above, the quantity signal may relate to the angular position of the measuring plates 62 about the longitudinal axis 66 of the support shaft 64. Because the plates 62 are pushed out of their respective initial position from the accumulation of the crop material within the pre-compression chamber 36, the angular position of the plates 62 about the longitudinal axis 66 of the shaft 64 relates to the amount or quantity of the crop material within the pre-compression chamber 36.

By correlating the known volume of the pre-compression chamber 36 and the quantity signal, the baler controller 60 may estimate a quantity of the crop material accumulated within the pre-compression chamber 36 from the quantity signal received from the crop sensor 58. When the crop quantity signal indicates that the quantity of the crop material accumulated within the pre-compression chamber 36 is less than the quantity threshold, the baler controller 60 may maintain the lock 72 in the engaged position to prevent movement of the feeder fork 40 and allow further crop material to accumulate within the pre-compression chamber 36. When the crop quantity signal indicates that the quantity of the crop material accumulated within the pre-compression chamber 36 is equal to or greater than the quantity threshold, the baler controller 60 may then control the feeder fork 40 to move from the retracted position to the extended position thereof.

The baler controller 60 may control the feeder fork 40 to move from the retracted position to the extended position by communicating the lock release signal to the actuator 76. As described above, the lock release signal is an electrical and/or electronic that activates the actuator 76 and causes the actuator 76 to move from the engaged position to the disengaged position, whereupon the feeder form may execute a feed stroke. The lock release signal may include, but is not limited to, and electrical impulse that activates the actuator 76 directly to extend or retract, or an electrical impulse that activates a control component of the actuator 76, such as but not limited to an electronically controlled hydraulic control valve, which in turn activates a hydraulic cylinder to extend or retract.

Because the actuator 76 is controlled electronically by the baler controller 60, the feeder system 38 disclosed herein eliminates the push-pull cable previously used to connect the measuring plates 62 and the lock 72. The push-pull cable was susceptible to operational failure due to dirt and debris contamination. As such, eliminating the push-pull cable increases the reliability of the feeder system 38. Additionally, the example implementation of the feeder system 38 described herein, in which the baler controller 60 is used to control the actuator 76, enables the operator to change the operating mode of the feeder system 38 and the amount of crop material that is accumulated for each feed stroke from the user interface 86, without the need to make manual adjustments to mechanical components of the feeder system 38.

In another implementation, it is contemplated that the crop sensor 58 may generate the quantity signal when the quantity of the crop material accumulated within the pre-compression chamber 36 is equal to or greater than the quantity threshold. This may be a simple electronic or electrical signal. The quantity signal may also be used as the lock release signal. As such, the actuator 76 may be directly connected to the crop sensor 58, whereby the actuator 76 is directly engaged in response to the quantity signal from the crop sensor 58 to move from the engaged position to the disengaged position. Once the crop material has been moved into the compression chamber 32, the measuring plates 62 are biased back into their initial position, whereupon the electrical quantity signal is disrupted, which in turn causes the actuator 76 to move from the disengaged position back to the engaged position. In so doing, the teachings of the disclosure may be implemented by a simple electrical circuit.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A baler implement (20) comprising:
a pre-compression chamber (36);
a compression chamber (32) positioned to receive crop material from the pre-compression chamber (36) and form the crop material into a bale;
a crop sensor (58) operable to sense data related to a quantity of the crop material accumulated within the pre-compression chamber (36);
a feeder fork (40) moveable relative to the pre-compression chamber (36) between a retracted position in which the feeder fork (40) is withdrawn from the pre-compression chamber (36) to allow the crop material to accumulate within the pre-compression chamber (36), and an extended position in which the feeder fork (40) protrudes into and moves through the pre-compression chamber (36) to move the crop material accumulated within the pre-compression chamber (36) into the compression chamber (32);
a baler controller (60) having a processor (78) and a memory (80) having a feeder control algorithm (82) stored thereon, wherein the processor (78) is operable to execute the feeder control algorithm (82) to:
receive a quantity signal from the crop sensor (58), wherein the quantity signal relates to the quantity of the crop material accumulated within the pre-compression chamber (36); and
control the feeder fork (40) to move from the retracted position to the extended position thereof when the crop quantity signal indicates that the quantity of the crop material accumulated within the pre-compression chamber (36) is equal to or greater than a quantity threshold.

2. The baler implement (20) set forth in claim 1, further comprising a lock (72) moveable between an engaged position in which the lock (72) is engaged with the feeder fork (40) to secure the feeder fork (40) in the retracted position, and a disengaged position in which the lock (72) is disengaged from the feeder fork (40) to allow movement of the feeder fork (40) between the retracted position and the extended position thereof.

3. The baler implement (20) set forth in claim 1 or 2, further comprising an actuator (76) coupled to the lock (72) and operable to move the lock (72) from the engaged position to the disengaged position in response to a lock release signal.

4. The baler implement (20) according to at least one of the preceding claims, wherein the processor (78) is operable to execute the feeder control algorithm (82) to control the feeder fork (40) by communicating the lock release signal to the actuator (76) when the crop quantity signal indicates that the quantity of the crop material accumulated within the pre-compression chamber (36) is equal to or greater than the quantity threshold.

5. The baler implement (20) according to at least one of the preceding claims, wherein the crop sensor (58) includes a plate (62) positioned within the pre-compression chamber (36) and moveable in response to a force exerted thereon by the crop material accumulated within the pre-compression chamber (36).

6. The baler implement (20) according to at least one of the preceding claims, wherein the crop sensor (58) includes a position sensor (70) operable to detect a position of the plate (62) relative to the pre-compression chamber (36) and generate the quantity signal, wherein the quantity signal is related to the position of the plate (62) relative to the pre-compression chamber (36).

7. The baler implement (20) according to at least one of the preceding claims, wherein the plate (62) is mounted to a shaft (64) and rotatable about a longitudinal axis (66) of the shaft (64).

8. The baler implement (20) according to at least one of the preceding claims, wherein the position sensor (70) is a rotary position sensor (70) operable to detect a change in rotational position of the shaft (64) about the longitudinal axis (66) of the shaft (64).

9. The baler implement (20) according to at least one of the preceding claims, wherein the actuator (76) is controllable via an electrical control signal.

10. The baler implement (20) according to at least one of the preceding claims, wherein the actuator (76) includes one of an electrically actuated linear actuator or a hydraulic cylinder responsive to an electrically actuated control valve.

11. The baler implement (20) according to at least one of the preceding claims, wherein the processor (78) is operable to execute the feeder control algorithm (82) to display a feeder control screen (84) on a user interface (86), wherein the feeder control screen (84) includes a mode selection button (88) for selecting a desired operating mode, and a quantity control button (90) for defining the quantity threshold.

12. The baler implement (20) according to at least one of the preceding claims, wherein the processor (78) is operable to execute the feeder control algorithm (82) to receive a mode selection input via a user interface (86), wherein the mode selection input selects a desired operating mode for the feeder fork (40).

13. The baler implement (20) according to at least one of the preceding claims, wherein the processor (78) is operable to execute the feeder control algorithm (82) to receive a threshold input via a user interface (86), wherein the threshold input defines the quantity threshold.
